# EUROPÄISCHE PATENTSCHRIFT

(11) **EP 0 579 898 B1**
(45) Veröffentlichungstag und Bekanntmachung des Hinweises auf die Patenterteilung: **30.07.1997**
(21) Anmeldenummer: 93102172.9
(22) Anmeldetag: 11.02.1993
(51) Int. Cl.: B23D 59/00, B23D 47/04, B27B 1/00, B27B 17/00

(54) **Rundholzmess- und Ablängsystem**
Measuring and cross cutting system for round timber
Dispositif de mesure et de découpage de bois rond

(30) Priorität: 20.07.1992 DE 4223856
(43) Veröffentlichungstag der Anmeldung: 26.01.1994
(73) Patentinhaber: H.I.T. BERTELE GmbH & CO. HOLZINDUSTRIETECHNIK, D-86833 Ettringen (DE)
(72) Erfinder: Bertele, Gebhard, W-8940 Memmingen (DE); Jeckle, Franz, W-8941 Hawangen (DE)
(74) Vertreter: Herrmann-Trentepohl, Werner, Dipl.-Ing.

(56) Entgegenhaltungen:
- WO-A-91/08076
- AT-B- 375 863
- DE-A- 3 204 368
- DE-U- 8 709 040
- US-A- 3 771 395
- US-A- 4 468 993
- SIEMENS POWER ENGINEERING Bd. 5, Nr. 4, August 1983, PASSAU (DE) Seiten 214 - 218 H. HOFMANN ET AL. 'Lignotron - Flexible, Highly Efficient Automation System for Timberyards and Sawmills'

## Beschreibung

Die Erfindung betrifft eine Rundholzmeß- und Ablängvorrichtung gemäß Oberbegriff von Patentanspruch 1 zur Anwendung in Sägewerken; siehe US-A 4 468 993.

Um die Langholzstämme entsprechend ihren Abmessungen und unter Berücksichtigung der vorliegenden Aufträge für das Schnittholz optimal zu zerlegen, sind computergestützte Meß- und Ablängeinrichtungen für Rundholz im Einsatz, die nach folgendem Prinzip arbeiten:

Mit einem gleisgebundenen Kranwagen werden die Langholzstämme vom Rundholzplatz entnommen, auf das Ablängpolter aufgelegt und durch mechanische oder hydraulische Klemmbacken unverrückbar festgelegt. Zur Erfassung der Abmessungen des Langholzstammes sowie zum Ablängen sind am Kranwagen eine Meßeinrichtung sowie eine Kappsäge angebracht. Zum Messen fährt der Kranwagen an ein Stammende, führt mit der Kappsäge einen Glattschnitt zur genauen Festlegung des Nullpunktes der Längenmessung aus und fährt den gesamten Stamm ab, wobei in bestimmten Rasterabständen Durchmesser-Messungen vorgenommen werden. Die Meßergebnisse werden in einen Computer eingegeben und mit den gespeicherten Schnittholzabmessungen der vorliegenden Aufträge verglichen. Danach gibt der Computer einen Vorschlag zum optimalen Ablängen des Stammes aus. Diesem Vorschlag entsprechend fährt der Kranwagen nunmehr die vorgegebenen Positionen an und nimmt die Schnitte mit der Kappsäge vor.

Diese bekannten Meß- und Ablängeinrichtungen haben unter anderem den Nachteil, daß der ca. 25 t schwere Kranwagen nicht nur zum Zu- und Wegführen des Holzes sondern auch zum Messen und Ablängen mehrmals die gesamte Stammlänge abfahren muß, was nicht nur zu einem erheblichen zusätzlichen Energieverbrauch und Materialverschleiß führt, sondern bei dem schwerfälligen Bewegungsablauf des masseintensiven Kranwagens auch relativ viel Zeit in Anspruch nimmt.

Der Erfindung liegt die Aufgabe zugrunde, eine Rundholzmeß- und Ablängvorrichtung zu entwickeln, die die vorgenannten Nachteile vermeidet, den Meßvorgang beschleunigt und einen wesentlich höheren Materialdurchsatz ermöglicht.

Die Aufgabe wird durch die im Patentanspruch 1 beschriebenen Merkmale gelöst. Vorteilhafte Ausführungsformen der Erfindung sind Gegenstand der Patentansprüche 2 bis 10.

Ein besonderer Vorteil der Erfindung besteht darin, daß der Meß- und Ablängwagen separat zum Holztransportfahrzeug (Kranwagen) vorgesehen ist und diesem gegenüber eine wesentlich verminderte Masse besitzt und deshalb erheblich schneller bewegt werden kann, wodurch sich die Meß- und Ablängzeiten enorm verkürzen und der Materialdurchsatz insgesamt beträchtlich erhöht wird. Hinzu kommt, daß das Holztransportfahrzeug nicht mehr an den Meß- und Ablängvorgang gebunden und in dieser Zeit frei für seine eigentlichen Aufgaben, nämlich den Holztransport, ist. Auch dies trägt zur Erhöhung des Materialdurchsatzes bei. Schließlich kommt es durch die Einsparung der "Leerfahrten" des schweren Holztransport- und -sortierwagens während des Messens und Ablängens auch zu einer nicht unerheblichen Energieeinsparung.

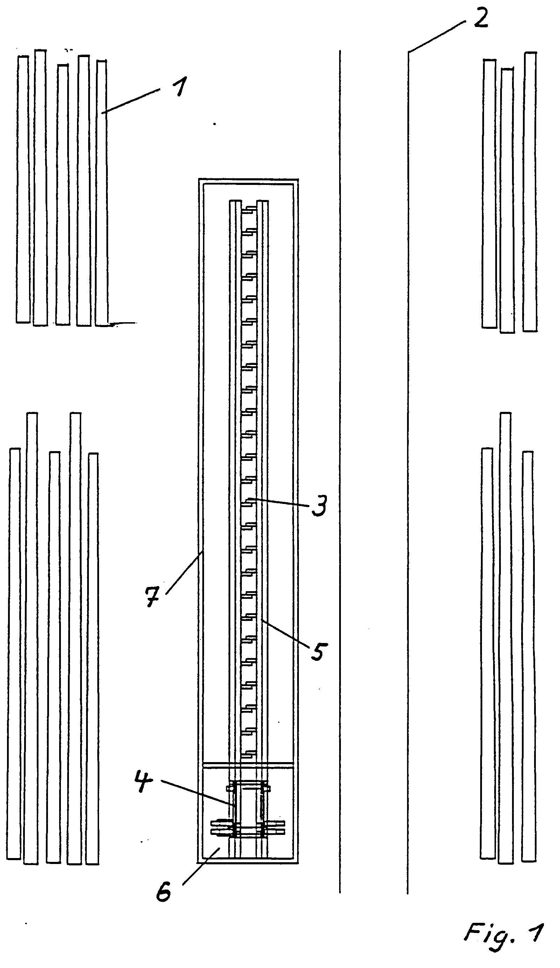

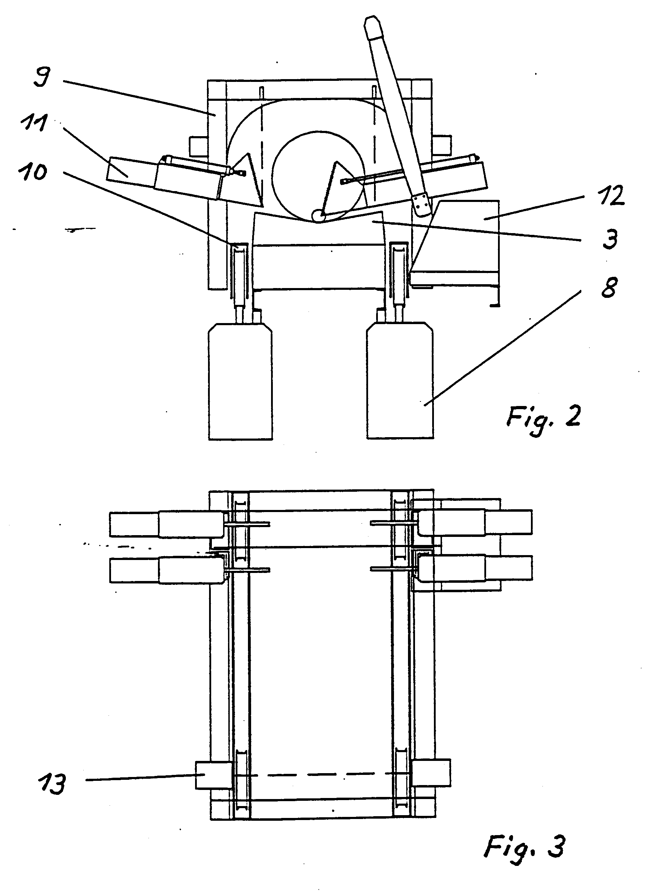

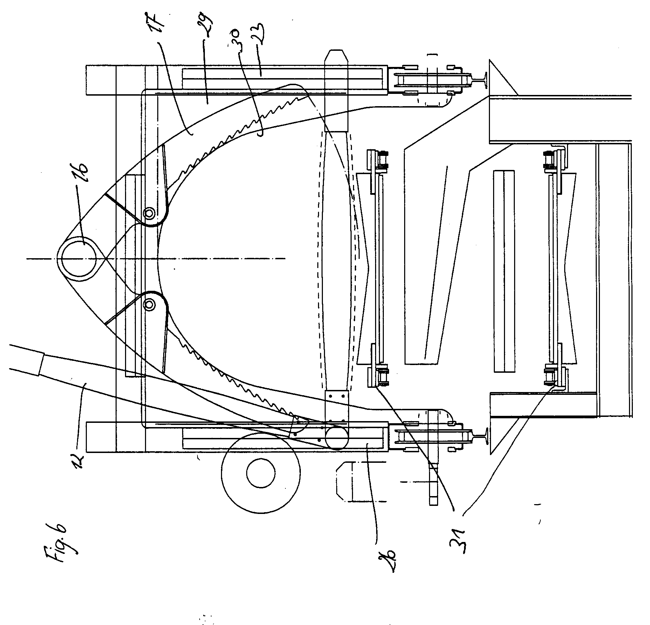

Die Erfindung soll nachfolgend anhand von Ausführungsbeispielen in Verbindung mit den Figuren 1 bis 6 näher erläutert werden. Darin zeigen:
- Fig. 1: eine Draufsicht auf eine erfindungsgemäße Rundholzmeß- und Ablängvorrichtung,
- Fig. 2: einen Meß- und Ablängwagen in Seitenansicht;
- Fig. 3: diesen Wagen in Draufsicht;
- Fig. 4: eine perspektivische Ansicht einer weiteren Ausführungsform in rein schematischer Darstellung zur Erläuterung der Anordnung der Klemmeinrichtung,
- Fig. 5: eine Stirnansicht des Wagens nach Fig. 4 sowie
- Fig. 6: eine Stirnansicht einer weiteren Ausführungsform des Wagens.

Die Langholzstämme 1 werden durch den Kran des auf den Gleisen 2 fahrenden Holztransport- und -sortierwagens auf dem fest mit dem Fundament 8 verbundenen Ablängpolter 3 abgelegt.

Eine spezielle Lagekontrolleinrichtung sorgt dafür, daß der Stamm so abgelegt ist, daß er vom Meß- und Ablängwagen 4 problemlos überfahren werden kann. Liegt der Stamm außerhalb des zulässigen Bereiches wird ein Warnsignal ausglöst und der Wagen automatisch gestoppt.

Zur Erfassung der Stammabmessungen wird der aufgelegte Stamm vom Meß- und Ablängwagen 4 in seiner ganzen Länge überfahren, der von der Steuerkabine des Holztransportfahrzeugs aus ferngesteuert wird. Am Gestell 9 des Meß- und Ablängwagens 4 ist ein Meßvorhang 13 vorgesehen, der eine Lichte von beispielsweise 1 m x 1 m besitzt, so daß Stämme bis 1 m Durchmesser und größer gemessen werden können. Die Längenmessung erfolgt durch Messung des zurückgelegten Weges des Wagens und beginnt an einem beliebigen Stammende. Die Nullinie wird durch Festlegung eines Glattschnittes in einem bestimmten Abstand vom Stammende gebildet. Die Stammdurchmesser werden in geeigneten Rastern ausgewertet, in einem im Unterstand 6 installierten Rechner abgespeichert und auf einem Bildschirm (Terminal) in der Steuerkabine des Holztransport- und -sortierwagens dargestellt.

Nach Abfahren des gesamten Stammes gibt der Computer durch Vergleich mit den in ihm gespeicherten vorliegenden Aufträgen optimale Ausformvorschläge aus, die am Bildschirm in der Steuerkabine des Holztransportfahrzeugs dargestellt werden. Der im Holztransportfahrzeug sitzende Bediener quittiert durch Tastendruck die Ausführung der vom Computer vorgegebenen Einteilungsvorschläge. Der Rechner, der, wie erwähnt, die Auftragsliste verwaltet, speichert sodann die zur Ablängung vorgesehenen Abschnitte.

Nach Ausführung des Meßvorganges wird der Meß- und Ablängwagen 4 am Stammende automatisch gestoppt. Das Ablängen des Stammes mit der Kappsäge 12 erfolgt in umgekehrter Folge zur Meßrichtung, d.h. das Ablängen beginnt sofort von dem beim Messen erreichten Stammende aus. Die Kappsäge 12 ist ebenso wie der Meßvorhang 13 fest mit dem Gestell des Meß- und Ablängwagens verbunden und wird automatisch oder durch Handsteuerung vom Bedienungsstand aus gesteuert. Die Abschnittlänge wird wiederum durch Messen des zurückgelegten Weges des Meß- und Ablängwagens ermittelt und die Kappsäge so in die entsprechenden Sollpositionen gefahren.

Vor der Ausführung des Kappschnittes wird der Stamm durch zusammenfahren der Klemmbacken 11 fixiert.

Für abfallende Holzteile oder Schmutz kann zwischen den Gleisen des Meß- und Ablängwagens 4 ein Schubboden oder Kratzförderer eingebaut werden. Das beim Kappen entstehende Sägemehl kann durch eine entsprechende Absaugung direkt am Schwert abgesaugt werden. Vorteilhaft ist auch eine zusätzliche Hubeinrichtung an den Klemmbacken, die beim Kappen den Stamm geringfügig anhebt, um ein Klemmen der Kettensäge und ein Einschneiden in die Auflagehölzer bzw. andere Teile zu verhindern.

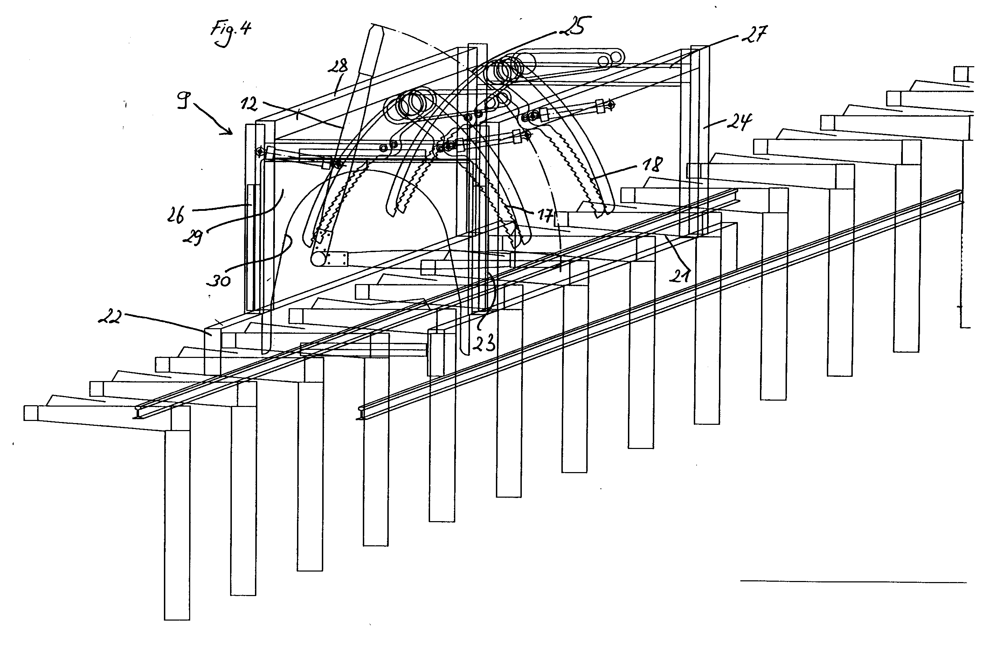

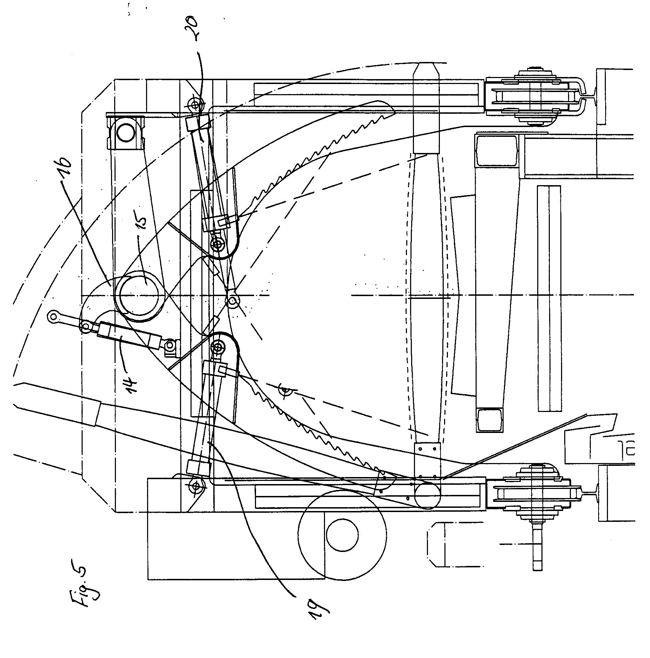

Im dargestellen Ausführungsbeispiel ist diese Hubeinrichtung entsprechend Fig. 5 aus einem auf einem Querbalken angeordneten Schubkolbengetriebe 14 gebildet, welches an einem mit dem Gelenk 15 eines Klemmbackenpaares verbundenen Hubarm 16 angreift. Daraus resultiert eine kleine Bauweise der Hubeinrichtung, die nur die Klemmbacken zu heben hat. Hierbei ist je Klemmbackenpaar ein Schubkolbengetriebe 14 vorgesehen. Die Klemmeinrichtung weist gemäß Fig. 4 zwei Klemmbackenpaare 17 und 18 auf, zwischen denen die Kappsäge 12 angeordnet ist. Die zwei Klemmbacken eines jeden Klemmbackenpaares 17, 18 sind an ihrem oberen Ende über ein Gelenk 15 miteinander verbunden, wobei unterhalb des Gelenkes die Enden von gleichfalls als Kolben-Zylindereinheiten ausgebildeten Schubkolbengetrieben 19, 20 angreifen, die die Klemmbacken in Klemmstellung fahren. Die Fig. 4 und 5 zeigen auch deutlich die Portalbauweise aus zwei unteren, die Räder aufnehmenden Längsbalken 21 und 22, vorderen und hinteren Ständern 23 bis 26 und oberen Längsbalken 27, 28, die durch obere Querbalken miteinander verbunden sind. Dadurch ergibt sich eine geschlossene und sehr steife Bauweise, wobei innerhalb des Portals die eigentlichen Arbeitsaggregate aufgenommen sind. Das Portal 9 ist hierbei zweckmäßigerweise als Vierkantrohrkonstruktion gebildet, wobei im Bereich der Ständer und Querbalken zumindest am vorderen und hinteren Ende des Portals Seitenwände 29 vorgesehen sind, die eine die Form eines umgekehrten U aufweisende Ausnehmung 30 für die Stammdurchführung aufweisen. Das Portal 9 trägt den Meßvorhang, die Kappsäge und die Klemmeinrichtung und besitzt einen Antrieb, wobei das Fahrwerk durch je zwei oder vier Räder auf den Längsbalken gebildet ist. Vorzugsweise sind zwei oder vier Aufsteckgetriebemotoren an den Rädern zur Aussteuerung über Frequenzumformer vorgesehen. Jeweils vor und nach jedem Rad kann ein Abstreifer angeordnet sein, der Verunreinigungen auf dem Gleis entfernt. Jeweils links und rechts vom Sägeblatt können alternativ zu den Klemmbackenpaaren im Vierkantrohr mit Kunststoffeinlage geführte Stamm-Klemmarme vorgesehen sein, die einzeln über Zylinder betätigbar sind. Die Zylinder können über Mengenteiler gekoppelt sein, der Unregelmäßigkeiten ausgleicht. Der Meßvorhang ist am Portal untergebracht und besitzt in einer Ausführungsform zwei vertikale gegenüberliegende Lichtleisten zur Bestimmung des vertikalen Stammdurchmessers. In einer weiteren Alternative können zusätzlich übereinander angeordnete horizontal oder diagonal ausgerichtete Lichtleisten vorgesehen sein, so daß der Stamm dann durch vier Lichtleisten geführt wird, wodurch auch der horizontale Durchmesser des Stammes gemessen werden kann.

Das Optimierungssystem mit dem Rechner kann auf dem Meß- und Ablängwagen angeordnet sein, wobei die Datenübertragung durch Funk auf das Bedienungssystem erfolgt, welches bevorzugt auf dem Holztransport- und -sortierwagen angeordnet ist. Anstelle einer Funkübertragung ist auch eine Datenlichtschranke möglich, wobei dann jedoch der Lichtsignalgeber auf dem Wagen geradlinig mit dem Empfänger ausgerichtet sein muß, von dem die Daten dann über Funk auf den Holztransportwagen übertragen werden. Alternativ kann das Optimierungssystem mit dem Computer auch außerhalb des Wagens angeordnet sein, wobei dann ein Schleppkabel oder eine Funkstrecke bzw. Datenlichtschranken zwischen dem Meßvorhang und dem Optimierungssystem vorhanden ist. Vorzugsweise ist ein eigenes Meßrad vorgesehen, über das die Messung mit einem Drehimpulsgeber erfolgt. Alternativ kann der Impulsgeber auch auf eines der nichtangetriebenen Räder des Wagens wirken. Wenn hierbei von Rädern gesprochen werden kann, ist es klar, daß es sich hier um schienenunabhängige Räder handeln kann, oder aber auch um Räder, die mit Schienen zusammenwirken.

Der Stamm kann stationär auf der aus einer Profilstahlkonstruktion ausgebildeten Holzablage entsprechend Figur 4 und 5 liegen, über die der Meß- und Ablängwagen fährt. Bevorzugt dient ein Antrieb 31 für den Abtransport der abgetrennten Stammabschnitte.

## Patentansprüche

1. Rundholzmeß- und Ablängvorrichtung, bei der Langholzstämme (1) durch einen fahrbaren Kran auf einem feststehenden Ablängpolter (3) abgelegt und dort nach Länge und Durchmesser vermessen werden, wobei die Meßwerte mit in einen, Computer gespeicherten, auftragsbezogenen Sollwert verglichen und durch diesen Vergleich optimierte Ablängabschnitte ermittelt werden, **dadurch gekennzeichnet,** daß ein an den Ablängpolter (3) gebundener, über die gesamte Längserstreckung desselben verfahrbarer, ferngesteuerter Meß- und Ablängwagen (4) vorgesehen ist, an dem alle Meß- und Ablängaggregate montiert sind.

2. Vorrichtung nach Anspruch 1, **dadurch gekennzeichnet**, daß die Durchmessermessungen in vorgegebenen Längsabschnitten über die Stammlänge erfolgen und die Meßergebnisse auf einen Computer übertragen werden, der auf oder außerhalb des Meß- und Ablängwagens (4) angeordnet ist und nach dem Ermitteln der Abmessungen jeweils eines Stammes im Vergleich mit den auftragsbezogenen Sollwerten optimierte Ausformvorschläge erstellt, die auf einem Bildschirm vorzugsweise in der Steuerkabine eines Holztransportfahrzeugs dargestellt werden, von denen aus der Meß- und Ablängwagen ferngesteuert wird.

3. Vorrichtung nach Anspruch 1 oder 2, **dadurch gekennzeichnet**, daß die Datenübertragung zwischen dem Meß- und Ablängwagen, dem Computer und/oder dem Holztransport- und -sortierwagen drahtlos über Funk oder durch eine Datenlichtschranke oder durch ein Kabel erfolgt.

4. Vorrichtung nach einem der vorhergehenden Ansprüche, **dadurch gekennzeichnet,** daß eine Kappsäge (12) zum Ablängen des Stammes, ein Meßvorhang (13) zur Ermittlung des Stammdurchmessers und eine Klemmeinrichtung (11) zum Halten des Stammes während des Kappschnittes auf dem Gestell des Meß- und Ablängwagens (4) angeordnet ist und automatisch oder durch Handsteuerung von dem Holztransportfahrzeug, etwa einem Bagger, aus gesteuert wird.

5. Vorrichtung nach Anspruch 4, **dadurch gekennzeichnet**, daß an der Klemmeinrichtung (11) eine zusätzliche Hubeinrichtung (14, 16) zur Anhebung des Stammes während des Kappschnittes angreift.

6. Vorrichtung nach einem der vorhergehenden Ansprüche, **dadurch gekennzeichnet**, daß der Meß- und Ablängwagen (4) in Portalbauweise (9) ausgeführt ist und vorzugsweise aus zwei die Räder tragenden unteren Längsbalken (21, 22) mit aufrechtstehenden vorderen und hinteren Ständern (23 bis 26) aufgebaut ist, die durch Quer- und obere Längsbalken (27, 28) miteinander zum Portal (9) verbunden sind, wobei vorzugsweise Meßvorhang, Kappsäge sowie Klemmeinrichtung im Portalinneren angeordnet sind.

7. Vorrichtung nach einem der vorhergehenden Ansprüche, **dadurch gekennzeichnet**, daß die Klemmeinrichtung ein vor und hinter der Kappsäge (12) angeordnetes zangenartig aufgebautes Klemmbackenpaar (17, 18) aufweist, wobei die Klemmbacken eines jeden Paares an ihrem oberen Ende an einem Gelenk (15) verbunden sind sowie jede Backe über ein im Portal (9) aufgenommenes, vorzugsweise als Kolben-Zylinder ausgebildetes Schubkolbengetriebe (19, 20) bewegbar ist, das an der Backe unterhalb des Gelenkes (15) angreift.

8. Vorrichtung nach Anspruch 7, **dadurch gekennzeichnet**, daß die Klemmbackenpaare (17, 18) unabhängig oder miteinander durch eine Hubeinrichtung (14, 16) für den Kappvorgang anhebbar sind, welche das Klemmbackenpaar an- bzw. absenkt und vorzugsweise aus einem als Kolbenzylinder ausgebildeten Linearantrieb (14) gebildet ist, der einen mit dem Gelenk (15) verbundenen Hubarm angreift.

9. Vorrichtung nach Anspruch 8, **dadurch gekennzeichnet**, daß der Linearantrieb (14) auf einem die oberen Längsbalken (27, 28) verbindenden Querbalken oder auf den oberen Längsbalken angeordnet ist.

10. Vorrichtung nach einem der vorhergehenden Ansprüche, **dadurch gekennzeichnet**, daß der Meßvorhang aus zwei vertikalen Lichtleisten oder aus zwei vertikalen und zwei horizontalen oder diagonalen Lichleisten aufgebaut ist, zwischen denen sich der Stamm beim Meßvorgang befindet.

## Claims

1. A measuring and cross-cutting device for round timber in which long trunks of timber (1) are deposited by means of a mobile crane onto a fixed and stationary cross-cut holding bed (3) and are there measured for length and diameter, wherein the measurements are compared with a theoretical value stored within a computer and directly related to the particular contract being handled, and wherein, as a result of this comparison, optimised cross-cut lengths are obtained, characterised in that a remote-controlled measuring and cross-cutting carriage (4) is provided which is connected to the cross-cut holding bed (3) and is capable of operating along the total longitudinal extent of said holding bed, and on which are mounted all the measuring and cross-cutting units.

2. A device according to claim 1, characterised in that the diameter measurements are effected in pre-selected sectional divisions along the whole length of the trunk and the measurement results are transferred to a computer which is located on or outside the measuring and cross-cutting carriage (4), and that, following the establishment of the dimensions of each respective trunk by comparison with the contract-specific theoretical values, optimised shaping options are suggested which are shown on a screen, preferably in the control cabin of a timber transporting vehicle, and are used to govern the remote control of the measuring and cross-cutting carriage.

3. A device according to claim 1 or 2, characterised in that the data transference between the measuring and cross-cutting carriage, the computer and/or the timber transporting and selecting vehicle is effected by wireless radio communication or by a data light-signal box or by means of a cable.

4. A device according to one of the preceding claims, characterised in that a swing saw (12) for cross-cutting the trunk, a measuring curtain (13) for establishing the diameter of the trunk and a clamping device (11) for holding the trunk during the cutting operation are arranged on the chassis frame of the measuring and cross-cutting carriage (4) and are controlled either automatically or manually from the timber transporting vehicle or excavating vehicle.

5. A device according to claim 4, characterised in that an additional lifting device (14, 16) for raising the trunk during the cutting operation engages the clamping device (11).

6. A device according to one of the preceding claims, characterised in that the measuring and cross-cutting carriage (4) is constructed in the form of a gantry and preferably comprises two lower longitudinal beams (21, 22) bearing the wheels and having upright forward and rearward pillars (23 to 26) which are connected to each other and to the gantry (9) by means of cross-beams and upper longitudinal beams (27, 28), wherein the measuring curtain, the swing saw and the clamping device are located preferably on the inside of the gantry.

7. A device according to one of the preceding claims, characterised in that the clamping device comprises a pincer-shaped pair of clamping jaws (17, 18) located before and behind the swing saw (12), wherein the clamping jaws of each of the pairs are joined at their upper ends to a swivel joint (15) and each jaw is movable by means of a thrust piston drive unit (19, 20) which is preferably in the form of a piston-cylinder mechanism housed within the gantry (9) and which engages the jaw at a point below the swivel joint (15).

8. A device according to claim 7, characterised in that the pairs of clamping jaws (17, 18) can be raised in the course of the cutting process either independently or together by means of a lifting device (14, 16) which raises or, as the case may be, lowers the pair of clamping jaws and preferably takes the form of a linear drive unit (14) constructed as a piston-cylinder which engages a lifting arm connected to the swivel joint (15).

9. A device according to claim 8, characterised in that the linear drive (14) is arranged on a cross-beam linking the upper longitudinal beams (27, 28) or on the upper longitudinal beams.

10. device according to one of the preceding claims, characterised in that the measuring curtain consists of two vertical inside-clearance fences or two vertical and two horizontal or diagonal inside-clearance fences between which the trunk lies during the measuring process.

## Revendications

1. Dispositif de mesure et de découpage de bois rond pour lequel des troncs de long bois sont déposés par une grue mobile sur un dispositif fixe de découpage (3) et leur longueur et diamètre mesurés, les valeurs mesurées étant comparées avec une valeur théorique mémorisée dans un ordinateur et spécifique à la commande et des sections de découpage optimisées par cette comparaison étant déterminées, caractérisé en ce qu'un chariot de mesure et de découpage (4) lié au dispositif de découpage (3), déplaçable sur l'ensemble de l'étendue longitudinale, télécommandé et sur lequel sont montés tous les agrégats de mesure et de découpage est prévu.

2. Dispositif selon la revendication 2, caractérisé en ce que les mesures du diamètre s'effectuent dans des sections longitudinales données sur la longueur du tronc et les résultats des mesures sont transmis sur un ordinateur qui est disposé sur ou en dehors du chariot de mesure et de découpage (4) et établit, après la détermination des mesures de chaque tronc en comparaison avec les valeurs théoriques spécifiques à la commande, des propositions de démoulage optimisées qui sont représentées sur un écran, de façon privilégiée dans la cabine de commande d'un véhicule de transport de bois, cabine à partir de laquelle le chariot de mesure et de découpage est télécommandé.

3. Dispositif selon les revendications 1 ou 2, caractérisé en ce que la transmission des données entre le chariot de mesure et de découpage, l'ordinateur et/ou le véhicule de transport et de triage de bois s'effectue sans fil par radio, par un barrage photoélectrique de données ou par un câble.

4. Dispositif selon l'une des revendications précédentes, caractérisé en ce qu'une scie oscillatoire (12) pour le découpage du tronc, un rideau de mesure (13) pour déterminer le diamètre du tronc et un dispositif de serrage (11) pour maintenir le tronc pendant la coupe sont disposés sur le châssis du chariot de mesure et de découpage (4) et commandés automatiquement ou manuellement à partir du véhicule de transport de bois, par exemple d'un excavateur.

5. Dispositif selon la revendication 4, caractérisé en ce qu'un dispositif de levage supplémentaire (14, 16) pour soulever le tronc pendant la coupe mord sur le dispositif de serrage (11).

6. Dispositif selon l'une des revendications précédentes, caractérisé en ce que le chariot de mesure et de découpage (4) est réalisé à la manière d'un portique (9) et est constitué de façon privilégiée de deux poutres longitudinales (21, 22) inférieures supportant les roues, avec des montants verticaux avant et arrière (23 à 26) qui sont assemblés l'un à l'autre pour former le portique (9) par des poutres longitudinales transversale et supérieure (27, 28), le rideau de mesure, la scie oscillatoire ainsi que le dispositif de serrage étant disposés à l'intérieur du portique.

7. Dispositif selon l'une des revendications précédentes, caractérisé en ce que le dispositif de serrage présente une paire de mâchoires de serrage (17, 18) ressemblant à des pinces et disposée devant et derrière la scie oscillatoire (12), les mâchoires de serrage de chaque paire étant reliées à une articulation (15) à leur extrémité supérieure et chaque mâchoire pouvant être déplacée par l'intermédiaire d'un engrenage à piston de poussée (19, 20) se présentant de façon privilégiée sous la forme d'un vérin à piston, logé dans le portique (9) et qui mord sur la mâchoire en dessous de l'articulation.

8. Dispositif selon la revendication 7, caractérisé en ce que les paires de mâchoires de serrage (17, 18) peuvent être soulevées de façon indépendante ou ensemble par un dispositif de levage (14, 16) pour le processus de coupe, dispositif de levage qui relève ou abaisse la paire de mâchoires de serrage et est constitué de façon privilégiée d'une commande linéaire (14) se présentant sous la forme d'un vérin à piston et qui saisit un bras de levage relié à l'articulation (15).

9. Dispositif selon la revendication 8, caractérisé en ce que la commande linaire (14) est disposée sur une poutre transversale reliant les poutres longitudinales transversales supérieures (27, 28) ou sur les poutres longitudinales supérieures.

10. Dispositif selon l'une des revendications précédentes, caractérisé en ce que le rideau de mesure est constitué de deux barres lumineuses verticales ou de deux barres lumineuses verticales et de deux horizontales ou diagonales entre lesquelles se trouve le tronc lors du processus de mesure.
